# EUROPEAN PATENT APPLICATION

(11) **EP 3 267 387 A1**
(43) Date of publication of application: **10.01.2018**
(21) Application number: 16758478.8
(22) Date of filing: 02.03.2016
(51) Int. Cl.: G06Q 30/06

(54) **ORDER PAIRING SYSTEM AND METHOD**

(30) Priority: 02.03.2015 CN 201510093009
(71) Applicant: Beijing Didi Infinity Technology and Development Co., Ltd., Beijing 100193 (CN)
(72) Inventor: LI, Xiang, Beijing 100193 (CN)
(74) Representative: Gosnall, Toby
(86) International application number: PCT/CN2016/075366
(87) International publication number: WO 2016/138863

(57) **Abstract**

The disclosure provides systems and methods for order pairing. The systems may include a computer-readable storage medium configured to store an executable module; and a processor configured to execute the executable module stored in the computer-readable storage medium. The computer-readable storage medium may include a sending unit configured to send information associated with an order; a selecting unit configured to determine whether an order receiver accepts the order; and a pairing unit configured to pair the order based on historical data of the order requestor and the order receiver that is determined to accept the order. The methods may include sending information associated with an order to an order receiver, determining whether the order receiver accepts the order, and pairing the order based on historical data of the order requestor and the order receiver that is determined to accept the order.

## Description

### CORSS-REFERENCE TO THE RELATED APPLICATION

This application claims priority to Chinese Patent Application No. 201510093009.6, filed on March 2, 2015, the contents of which are incorporated herein in their entirety by reference.

### TECHNICAL FIELD

The present disclosure relates to systems and methods for order pairing, and more particularly, systems and methods for order pairing using mobile internet technology and data processing technology.

### BACKGROUND

With the rapid development of the urbanization, taxi hailing services have become the general demands of all social classes. At the same time, because of the rapidly advanced mobile internet and the popularity of intelligent devices (e.g., smart navigator and/or smart phone), the usage of taxi hailing system platform has becoming a common thing. For the taxi hailing system platform, it's a challenging issue as how to pair the drivers and the passengers accurately and effectively to enhance their mutual experience.

### SUMMARY

In one aspect of the present disclosure, a system is provided. The system may include a computer-readable storage medium, which may be configured to store an executable module, and a processor, which may be configured to execute the executable module stored in the computer-readable storage medium. The computer-readable storage medium may include a sending unit, which may be configured to send order information; a selecting unit, which may be configured to determine whether an order receiver accepts the order; and a pairing unit, which may be configured to pair the order based on historical data of the order requestor and the order receiver that is determined to accept the order.

In one aspect of the present disclosure, a system is provided. The system may include a computer-readable medium, code stored in the computer-readable storage medium, and a processor. When executing the code, the processor may perform actions including sending order information, determining whether an order receiver accepts the order, and pairing the order based on historical data of the order requestor and the order receiver that is determined to accept the order.

In one aspect of the present disclosure, a method is provided. The method may include sending order information, determining whether the order receiver accepts the order, and pairing the order based on historical data of the order requestor and the order receiver that is determined to accept the order.

According to some embodiments of the present disclosure, the order information may include the historical data and/or present data of the order requestor and/or the order receiver.

According to some embodiments of the present disclosure, the determining whether the order receiver accepts the order may be based on at least one of the historical data of the order requestor, distance between the order requestor and the order receiver, and idle condition of the order receiver.

According to some embodiments of the present disclosure, the determining whether the order receiver accepts the order may further include sending at least part of the historical data of the order requestor to the order receiver.

According to some embodiments of the present disclosure, the historical data may include at least one of historical evaluation data of the order requestor and the order receiver, historical transaction data of the order requestor and the order receiver, at least one historical pairing data of the order requestor and the order receiver.

According to some embodiments of the present disclosure, the pairing the order based on the historical data of the order requestor and the order receiver that is determined to accept the order may further include determining a historical tab that denotes characteristic of the order requestor and the order receiver based on the historical data of the order requestor and the order receiver, and pairing the order requestor and the order receiver that is determined to accept the order.

According to some embodiments of the present disclosure, the historical tab may include at least one of the historical evaluation data of the order requestor and the order receiver, the historical transaction data of the order requestor and the order receiver, and historical pairing data of the order requestor and the order receiver.

According to some embodiments of the present disclosure, the method for order pairing may further include updating the historical tab based on update of the historical data.

In one aspect of the present disclosure, a method is provided. The method may include sending information to the order pairing system by a terminal, and receiving an order pairing result determined by the system based on the information by the terminal.

According to some embodiments of the present disclosure, the terminal may include an order requestor terminal and an order receiver terminal.

According to some embodiments of the present disclosure, the information sent by the terminal to the system may include at least one of location information, confirmation information, historical information, or evaluation information of the order requestor; and location information, idle condition, order accepting information, historical data, and evaluation information of the order receiver.

According to some embodiments of the present disclosure, the terminal may be configured to display the order pairing result, and display format may include voice, text, image, or video.

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1 illustrates a schematic diagram of an exemplary location-based service system in a network environment according to some embodiments of the present disclosure;
FIG. 2 illustrates a schematic diagram of an exemplary order pairing engine 110 according to some embodiments of the present disclosure;
FIG. 3 illustrates a schematic diagram of an exemplary processing module 210 in the order pairing engine 110 according to some embodiments of the present disclosure;
FIG. 4A illustrates a schematic diagram of an exemplary passenger interface 230 in the order pairing engine 110 according to some embodiments of the present disclosure;
FIG. 4B illustrates a schematic diagram of an exemplary driver interface 240 in the order pairing engine 110 according to some embodiments of the present disclosure;
FIG. 5 illustrates a schematic diagram of an exemplary user terminal according to some embodiments of the present disclosure;
FIG. 6 illustrates a schematic diagram of an exemplary database 130 according to some embodiments of the present disclosure;
FIG. 7 illustrates a flow chart of an exemplary process for pairing orders according to some embodiments of the present disclosure;
FIG. 8 illustrates a flow chart of an exemplary process for pairing orders according to some embodiments of the present disclosure;
FIG. 9 illustrates an exemplary structure of a mobile device configured to implement systems disclosed in the present disclosure; and
FIG. 10 illustrates an exemplary structure of a computing device configured to implement systems disclosed in the present disclosure.

### DETAILED DESCRIPTION

In order to illustrate the technical solutions related to the embodiments of the present disclosure, brief introduction of the drawings referred to in the description of the embodiments is provided below. Obviously, drawings described below are only some examples or embodiments of the present disclosure. Those having ordinary skills in the art, without further creative efforts, may apply the present disclosure to other similar scenarios according to these drawings. Unless stated otherwise or obvious from the context, the same reference numeral in the drawings refers to the same structure and operation.

As used in the disclosure and the appended claims, the singular forms "a," "an," and "the" include plural referents unless the content clearly dictates otherwise. It will be further understood that the terms "comprises," "comprising," "includes," and/or "including" when used in the disclosure, specify the presence of stated steps and elements, but do not preclude the presence or addition of one or more other steps and elements.

As used in the disclosure and the appended claims, the terms "system," "module," "unit," and/or "component" may only be used to denote the hierarchical relationship of the structure with no absolute meaning. It should be understood that these terms could be used interchangeably, or substituted by other words as required.

Some modules, units, and/or components of the system may be referred to in various ways according to some embodiments of the present disclosure, however, any amount of different modules, units, and/or components may be used and operated in a client terminal and/or a server. These modules, units, and/or components are intended to be illustrative, not intended to limit the scope of the present disclosure. Different modules, units, and/or components may be used in different aspects of the system and method.

According to some embodiments of the present disclosure, flow charts are used to illustrate the operations performed by the system. It is to be expressly understood, the operations above or below may or may not be implemented in order. Conversely, the operations may be performed in inverted order, or simultaneously. Besides, one or more other operations may be added to the flowcharts, or one or more operations may be omitted from the flowchart.

Embodiments of the present disclosure may be applied to different transportation systems including but not limited to land transportation, sea transportation, air transportation, space transportation, or the like, or any combination thereof. For example, the embodiments of the present disclosure may be used in taxi, chauffeured car service, ride sharing service, bus, train, bullet train, high-speed rail, subway, ship, airplane, spaceship, hot-air balloon, driverless vehicle, sending/receiving an express, or any transportation system that management and/or distribution are applied in. The application scenarios of different embodiments of the present disclosure may include but not limited to one or more webpages, browser plugins and/or extensions, client terminals, custom systems, intracompany analysis systems, artificial intelligence robots, or the like, or any combination thereof. It should be understood that application scenarios of the system and method disclosed herein are only some examples or embodiments. Those having ordinary skills in the art, without further creative efforts, may apply these drawings to other application scenarios, for example, registration services, rental housing service, food delivery service, job recruitment service, shopping service, or the like, or any combination thereof.

The term "passenger," "order requestor," "customer," "requestor," and "service requestor" in the present disclosure are used interchangeably to refer to an individual, an entity, or a tool that may request or order a service. Also, the term "driver," "order receiver," "provider," "supplier," "service provider," "servant," and "server" in the present disclosure are used interchangeably to refer to an individual, an entity, or a device that may provide a service or facilitate the providing of the service. In addition, the term "user," "terminal," and/or "user terminal" in the present disclosure may refer to a party that may request a service, or provide or assist in providing a service.

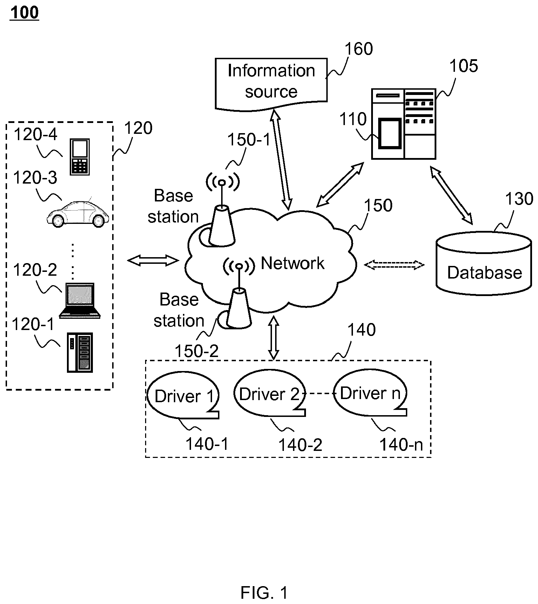

FIG. 1 illustrates a schematic diagram of an exemplary location-based service system in a network environment according to some embodiments of the present disclosure. The location-based service system 100 may include an on-demand service system 105, one or more passenger terminals 120, one or more databases 130, one or more driver terminals 140, one or more networks 150, and one or more information sources 160. In some embodiments, the on-demand service system 105 may include an order pairing engine 110. In some embodiments, the order pairing engine 110 may be a system configured to analyze and process gathered information to generate an analytical result. The order pairing engine 110 may be a server, a part of a server, or a server group. The server group may be centralized (e.g., a data center) or distributed (e.g., a distributed system). The order pairing engine 110 may be centralized or distributed. The order pairing engine 110 may be local or remote. In some embodiments, the order pairing engine 110 may access the user 120/140 (e.g., a passenger terminal 120, or a driver terminal 140), the information source 160, and/or the database 130 via the network 150 or any other communication manners.

The passenger terminal 120 and the driver terminal 140 may be collectively referred to as user, user terminal, or terminal. The passenger terminal 120 and the driver terminal 140 may be any individual, entity, or tool related to service orders, e.g., a service requestor and a service provider. A passenger may be a service requestor. In the present disclosure, "passenger," "order requestor," "passenger terminal," "order requestor terminal," and "passenger terminal device," may be used interchangeably. The passenger may also include the user of the passenger terminal 120. In some embodiments, the user may not be the passenger himself/herself. For example, a user A of the passenger terminal 120 may use the passenger terminal 120 to order an on-demand service, accept an on-demand service, or receive any other information or instructions from the on-demand service system 105 for a user B. For convenience, the user of the passenger terminal 120 may also be referred to as "passenger" in the present disclosure. In the present disclosure, "driver," "order receiver," "driver terminal," "order receiver terminal," and "driver terminal device" may be used interchangeably. The driver may include a user of the driver terminal 140. In some embodiments, the user may not be the driver himself/herself. For example, a user C of the driver terminal 140 may use the driver terminal 140 to accept an on-demand service, or receive any other information or instructions from the on-demand service system 105 for a user D. For convenience, the user of the driver terminal 140 may also be referred to as "driver" in the present disclosure. In some embodiments, the passenger terminal 120 may include but not limited to a desktop computer 120-1, a laptop computer 120-2, a built-in device of a vehicle 120-3, a mobile device 120-4, or the like, or any combination thereof. Herein, the built-in device 120-3 may be a carputer, or the like. In some embodiments, the passenger terminal 120 may also be other smart terminals including but not limited to smart home device, wearable device, smart mobile device, or any other smart devices. Smart home device may include but not limit to smart lighting equipment, smart appliance controlling equipment, smart monitoring equipment, smart TV, smart camera, smart phone, walkie-talkie, or the like, or any combination thereof. Wearable device may include but not limit to smart bracelet, smart watch, smart sock, smart glass, smart helmet, smart headband, smart clothing, smart backpack, smart accessory, or the like, or any combination thereof. Smart mobile device may include but not limit to transportation equipment (e.g., on-board computer, or on-board TV), game equipment, GPS equipment, POS machine, or the like, or any combination thereof. The driver terminal 140 may also include one or more of the similar devices as the description of the passenger terminal 120.

In some embodiments, the database 130 may refer to a device with storage function. The database 130 may be configured to store data received from the user 120/140 and generated by the order pairing engine 110. The database 130 or other storage devices in the system may refer to all the media that can read/write. The database 130 or other storage devices in the system may be local or remote. The database 130 may include but not limit to hierarchical database, network database, relational database, or the like, or any combination thereof. The database 130 may digitize information and then store the information in storage device, e.g., electrical storage device, magnetic storage device, optical storage device, or the like. The database 130 may be configured to store information including, e.g., system, software, program, data, or the like. The database 130 may be a device that use electricity to store information, e.g., various storage, random access memory (RAM), read-only memory (ROM), or the like. The RAM may include but not limit to decade counting tube, selectron, delay line memory, Williams tube, dynamic random access memory (DRAM), static random access memory (SRAM), thyristor random access memory (TRAM), Zero capacitor RAM (Z-RAM), or the like, or any combination thereof. The ROM may include but not limit to magnetic bubble memory, magnetic button line memory, film memory, magnetic plated wire memory, magnetic core memory, magnetic drum memory, optical drive, hard disk, magnetic tape, early nonvolatile random access memory (NVRAM), phase change memory, magnetoresistive random access memory, ferroelectric random access memory, nonvolatile SRAM, flash memory, electronically erasable read only memory, erasable programmable read only memory, programmable read-only memory, masked heap read memory, floating connection gate random access memory, nano random access memory, racetrack memory, variable resistance memory, programmable metallization unit, or the like, or any combination thereof. The database 130 may be a device that use magnetism to store information, e.g., hard dish, floppy disk, magnetic tape, magnetic core memory, magnetic bubble memory, U disk, flash memory, or the like. The database 130 may be a device that use optics to store information, e.g., CD, DVD, or the like. The database 130 may be a device that use magnetism and optics to store information, e.g., magneto-optical disk, or the like. The access mode of the database 130 may include random storage, serial access storage, read-only storage, or the like, or any combination thereof. The database 130 may be impermanent memory or permanent memory. The storage devices mentioned above may be examples for illustrating, and the storage devices used in the location-based service system 100 may not be limited.

The database 130 may be connected to and communicate with the network 150, the on-demand system 105, part of the on-demand system 105 (e.g., order pairing engine 110), or any combination thereof. In some embodiments, the database 130 may be set in the background of the on-demand service system 105. In some embodiments, the database 130 may be independent and connected to the network 150 directly. The connection between the database 130 and the other modules may be wireless or wired. The network 150 may provide channels for information exchanging. When the database 130 is connected to the network 150, the user 120/140 may access the database 130 via the network 150. The access rights of different modules to the database 130 may be limited. For example, the on-demand service system 105, or part of the system (e.g., the order pairing engine 110), having the highest access right to the database 130, may read or modify the public or individual information from the database 130. The passenger terminal 120 or the driver terminal 140 may read the information of party of the public or individual information related to the user when certain conditions are met. For example, the on-demand service system 105 may update/modify the public information or information related to a user based on the experience of the user using the on-demand service system once or more. As another example, when a driver receives a service order from a passenger, part of the information of the passenger in the database 130 may be accessible to the driver. Meanwhile, the driver may not allowed to modify the information of the passenger in the database 130. The driver may report to the on-demand service system 105, and the on-demand service system 105 may determine whether or not to modify the information of the passenger in database 130. As another example, when a passenger receives the service order to offer a service from a driver, part of the information of the driver in the database 130 may be accessible to the passenger, e.g., score information of user, driving experience, or the like. Meanwhile, the passenger may not be allowed to modify the information of the driver in the database 130. The passenger may report to the on-demand service system 105, and the on-demand service system 105 may determine whether or not to modify the information of the driver in the database 130.

The network 150 may be a single network or a combination of networks. For example, the network 150 may include but not limited to a local area network (LAN), a wide area network (WAN), a public network, a private network, a wireless local area network, a virtual network, a metropolitan area network, a public switched telephone network (PSTN), or the like, or any combination thereof. The network 150 may include multiple network access points, such as a wired or wireless access point, a base station, a network switched point, etc. Through these access points, any data source may be connected to the network 150 and transmit information via the network 150.

The information source 160 may be a source configured to provide other information to the system 105. For example, the information source 160 may provide the location-based service system 100 with service information including, for example, weather conditions, traffic information, information of laws and regulations, news events, life information, life guide information, or the like. The information source 160 may be implemented using a single central server, multiple servers connected via a network, or multiple personal devices, etc. When the information source is implemented using multiple personal devices, the personal devices may generate content (e.g., as referred to as the "user-generated content"), for example, by uploading text, voice, image, and video to a cloud server. An information source may thus be generated by the multiple personal devices and the cloud server. The information source 160 may be connected to and communicate with the network 150, the on-demand system 105, part of the on-demand system 105 (e.g., the order pairing engine 110), or any combination thereof. When the information source 160 is connected to and communicate with the network 150, the user 120/140 may access to the information source 160 via the network 150. The connection between the information source 160 and the other modules may be wireless or wired.

Taking transportation service as an example, the information source 160 may include a municipal service system containing map information and city service information, a real-time traffic broadcasting system, a weather broadcasting system, a news network, or the like. The information source 160 may be a physical device, such as a common speed measuring device, a sensor, or an IOT (Internet of things) device, such as a vehicle speedometer, an on-board diagnostics, a radar speedometer, a temperature and humidity sensor, etc. The information source 160 may be a source configured to obtain news, messages, real-time road information, or the like. For example, the information source 160 may be a network information source that includes an Internet news group based on Usenet, a server over the Internet, a weather information server, a road condition information server, a social network server, or the like. Taking food delivery service as an example, the information source 160 may be a system storing information of multiple food providers in a region, a municipal service system containing map information and city service information, a real-time traffic broadcasting system, a weather broadcasting system, a news network, or the like. The examples described above are not intended to limit the scope of the information source or the type of services provided by the information source. Any device or network that can provide information of the services may be designated as an information source in the present disclosure.

In some embodiments, the communication between different modules in the location-based service system 100 may be in the form of order. The subject matter of the order may be any product. In some embodiments, the product may be a tangible product or an intangible product. The tangible product may be any object with a shape or a size, including food, medicine, commodities, chemical products, electrical appliances, clothing, vehicles, house estates, luxuries, or the like, or any combination thereof. The intangible product may include service products, financial products, intellectual products, Internet products, or the like, or any combination thereof. The Internet products may include any product that satisfies the user's requirements on information, entertainment, communication, or transaction. There may be many methods of classifying the Internet products. Taking the classification method based on host platform as an example, the Internet products may include personal host products, Web products, mobile Internet products, commercial host platform products, built-in products, or the like, or any combination thereof. The mobile Internet product may be a software, a program or a system used in mobile terminals. Herein, the mobile terminal may include but not limited to a laptop computer, a tablet computer, a mobile phone, a personal digital assistant (PDA), an electronic watch, a POS machine, a carputer, a television, or the like, or any combination thereof. And the mobile Internet product may include various software or applications of social communication, shopping, travel, entertainment, learning, or investment used in the computer or mobile phone. The travel software may be a trip software, a vehicle booking software, a map software, or the like. The vehicle booking software may be used to book vehicles (e.g., taxis, buses, or driverless car), trains, subways, ships (e.g., steamer), aircrafts (e.g., planes, unmanned aerial vehicle, space shuttles, rockets), or the like, or any combination thereof.

It should be noted that the above description of the location-based service system 100 is merely provided for illustration purposes, and not intended to limit the scope of the present disclosure. For persons having ordinary skills in the art, upon understanding the principle of the system, modules may be combined in various ways, or connected with other modules as sub-systems, modifications and variations may be conducted on the formats and details of the application filed implementing the methods and systems described above, without departing the principle. For example, the database 130 may be a cloud computing platform with data storing function that includes but not limited to a public cloud, a private cloud, a community cloud, a hybrid cloud, etc. All modifications like these are within the protection scope of the present disclosure.

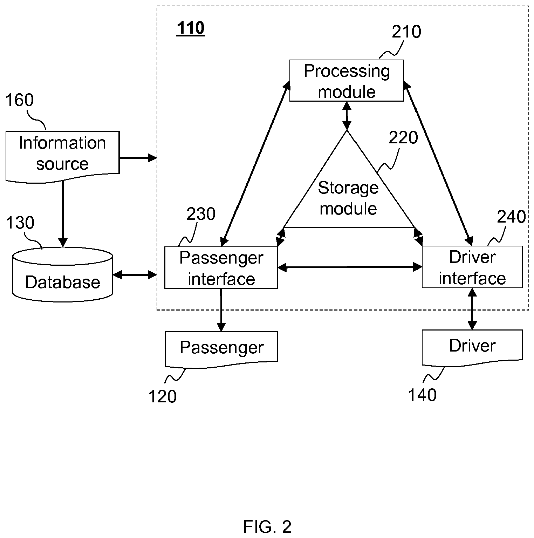

FIG. 2 illustrates a schematic diagram of an exemplary order pairing engine 110 according to some embodiments of the present disclosure. For convenience, a taxi hailing service system may be taken as an example to illustrate the order pairing engine 110. The order pairing engine 110 may include one or more processing modules 210, one or more storage modules 220, one or more passenger interfaces 230, and one or more driver interfaces 240. The order pairing engine 110 may be centralized or distributed. One or more modules of the order pairing engine 110 may be local or remote. In some embodiments, the order pairing engine 110 may be a web server, a file server, a database server, an FTP server, an application server, a proxy server, a mail server, or the like, or any combination thereof.

In some embodiments, the processing module 210 may be configured to process related information. The processing module 210 may receive information from the passenger interface 230, the driver interface 240, the storage module 220, the database 130, and the information source 160. The processing module 210 may send the processed information to the passenger interface 230 and/or the driver interface 240. The processed information may be stored in the database 130, the storage module 220, or any other backup database or storage device. The methods of processing information may include but not limited to storing, classifying, filtering, converting, calculating, retrieving, predicting, training, or the like, or any combination thereof. In some embodiments, the processing module 210 may include but not limited to a central processing unit (CPU), an application specific integrated circuit (ASIC), an application specific instruction set processor (ASIP), a physics processing unit (PPU), a digital processing processor (DSP), a field-programmable gate array (FPGA), a programmable logic device (PLD), a processor, a microprocessor, a controller, a microcontroller, or the like, or any combination thereof.

It should be noted that the processing module 210 and/or the database 130 may reside in the system, or implement corresponding functions via a cloud computing platform. Herein, the cloud computing platform may include but not limited to a storage-based cloud platform mainly used for data storing, a calculation-based cloud platform mainly used for data processing, or a hybrid cloud platform used for both data storing and processing, etc. The cloud platform used by the system may be a public cloud, a private cloud, a community cloud, a hybrid cloud, or the like. For example, some order information and/or non-order information received by the system may be calculated and/or stored by the user cloud platform according to actual requirements. Other order information and/or non-order information may be calculated and/or stored by a local processing module and/or a system database. In some embodiments, the passenger interface 230 and the driver interface 240 may be configured to receive the information sent by the passenger terminal 120 and the driver terminal 140 respectively. Herein, the information may include but not limited to account information of the service, requesting information of the service, receiving information of the service, habit/preference information of the user, location information of the user, evaluation information of the user, or the like, or any combination thereof. Herein, the account information of the service may include name, nickname, gender, nationality, contact information (e.g., telephone number, cellphone number, or social account information), occupation, evaluation level, time of using, driving age, vehicle age, motorcycle type, vehicle condition, plate number, driving license number, certification, additional service competence, or the like, or any combination thereof. The requesting information of order may include order requesting information of the user (e.g., the taxi request of a passenger, order receiving request or order accepting request of a driver), other requesting information of the user (e.g., request about obtaining order density of a certain region sent from the driver to the system), or the like. The receiving information of the service may include information about the user agreeing to receive the order, information about the user giving up receiving the order, information about the user successfully receiving the order, information about the user failing to receive the order, or the like. The habit/preference information of the user may include preference of the passenger for the driver, acceptable waiting time of the passenger, preference for carpooling passenger of the passenger, preference of the passenger for motorcycle type, preference of the driver for original site, terminal site, or departure time, or the like. The location information of the user may include location of the user, surrounding environment, original site, terminal site, ride distance, route, traffic condition in the route, or the like. The evaluation information of the user may be mutual evaluation between the driver and the passenger, e.g., "good service," "cheerful personality," "enthusiasm," "bad service," or "poor communicator." The format of the information may include but not limited to text, audio, video, image, or the like, or any combination thereof. The input mode of the information may be handwriting, gesture, image, audio, video, electromagnetic wave, or the like, or any combination thereof. The received information may be stored in the database 130, stored in the storage module 220, or calculated and processed by the processing module 210, or any combination thereof.

In some embodiments, the locate information of a user may be obtained by a positioning system. For example, the system may obtain information of the user by one or more positioning technologies, e.g., the location, the original site, the motion state, the velocity of movement, or the like. The positioning system may include but not limited to global positioning system (GPS), global navigation satellite system (GLONASS), compass navigation system (COMPASS), Beidou navigation system, Galileo positioning system (Galileo), quasi-zenith satellite system (QZSS), base-station positioning technology, wireless fidelity (Wi-Fi) positioning technology, Bluetooth positioning technology, positioning and speed measuring system of the vehicle, or the like, or any combination thereof.

In some embodiments, the passenger interface 230 and the driver interface 240 may be configured to output processed information processed by the processing module 210. The information may be the optimized location information, the original order information, the processed order information, the original user information, the processed user information, or the like. The format of information may include but not limited to text, audio, video, image, or the like, or any combination thereof. The output information may be sent to the passenger terminal 120 and/or the driver terminal 140, or not be sent. Instead of being sent, the output information may be stored in the database 130 or the storage module 220.

It should be understood that the system illustrated in FIG. 2 may be implemented by a variety of methods. For example, the system may be implemented by a hardware, a software, or a combination thereof. Herein, the hardware may be implemented by a dedicated logic. The software may be stored in the memory, and may be implemented by an appropriate instruction execution system (e.g., a microprocessor or a dedicated design hardware). It will be appreciated by those skilled in the art that the above methods and systems may be implemented by computer-executable instructions and/or embedding in control codes of a processor. For example, the control codes may be provided by a medium such as a disk, a CD or a DVD-ROM, a programmable memory device such as read-only memory (e.g., firmware), or a data carrier such as an optical or electric signal carrier. The system in the present disclosure and its modules may not only be implemented by large scale integrated circuits or gate arrays, semiconductor devices (e.g., logic chips, or transistors), or hardware circuits of programmable hardware devices (e.g., field programmable gate arrays, or programmable logic devices), but may also be implemented by software executed in various types of processors, or a combination of the above hardware circuits and software (e.g., firmware).

It should be understood that the system illustrated in FIG. 2 may not only be limited to the taxi hailing service system, but also be applied to other traffic service system or other service system, e.g., registration service, rental housing service, food delivery service, job recruitment service, shopping service, or the like. The illustration in the present disclosure is not intended to limit the scope of the present disclosure.

It should be noted that the above description of the order pairing engine 110 is provided for the purposes of illustration, and not intended to limit the scope of the present disclosure. For persons having ordinary skills in the art, upon understanding the principle of the system, modules may be combined in various ways, or connected with other modules as sub-systems without departing the principle. For example, the processing module 210, the storage module 220, the passenger interface 230, the driver interface 240, and the database 130 may be different modules in one system, or may be combined as a single module to perform the corresponding functions of two or more of the above modules. For example, the passenger interface 230 and the driver interface 240 may be combined as a single module that may be configured to perform functions of input and output, or may be an input module and an output module communicating both with the passenger/driver. As another example, the processing module 210 and the storage module 220 may be two independent modules, or a single module with both processing and storage functions. As still another example, all of the modules may share a single storage module, or each of the modules may have its own storage module. All modifications like these are within the protection scope of the present disclosure.

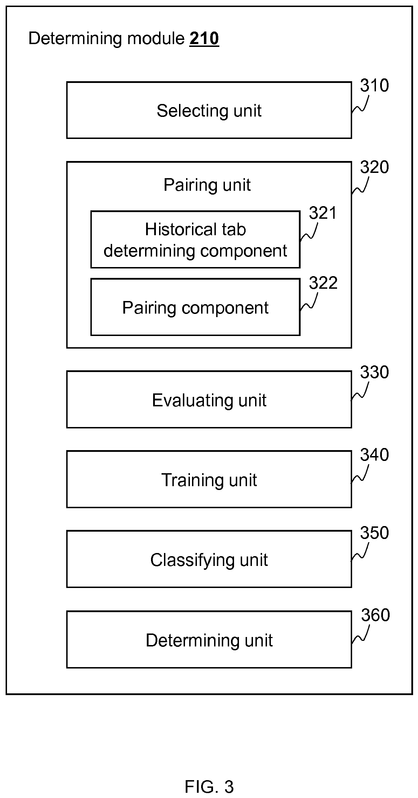

FIG. 3 illustrates a schematic diagram of an exemplary processing module 210 in the order pairing engine 110 according to some embodiments of the present disclosure. The processing module 210 may include one or more selecting units 310, one or more pairing units 320, one or more evaluating units 330, one or more training units 340, one or more classifying units 350, and one or more determining units 360. It should be noted that the order pairing engine 110 may include one or more of the above units, all of the above units, or any other components except the above units.

The selecting unit 310 may select order receiver based on the order information received from the passenger interface 230 and/or the driver interface 240. Herein, the information may include but not limited to account information of the service, requesting information of the service, receiving information of the service, habit/preference information of the user, location information of the user, evaluation information of the user, or the like, or any combination thereof. Herein, the account information of the service may include name, nickname, gender, nationality, contact information (e.g., telephone number, cellphone number, or social account information), occupation, evaluation level, time of using, driving age, vehicle age, motorcycle type, vehicle condition, plate number, driving license number, certification, additional service competence, or the like, or any combination thereof. The requesting information of order may include order requesting information of the user (e.g., the taxi request of a passenger, order receiving request or order accepting request of a driver), other requesting information of the user (e.g., request about obtaining order density of a certain region sent from the driver to the system), or the like. The receiving information of the service may include information about the user agreeing to receive the order, information about the user giving up receiving the order, information about the user successfully receiving the order, information about the user failing to receive the order, or the like. The habit/preference information of the user may include preference of the passenger for the driver, acceptable waiting time of the passenger, preference for carpooling passenger of the passenger, preference of the passenger for motorcycle type, preference of the driver for original site, terminal site, or departure time, or the like. The location information of the user may include location of the user, surrounding environment, original site, terminal site, ride distance, route, traffic condition in the route, or the like. The evaluation information of the user may be mutual evaluation between the driver and the passenger, e.g., "good service," "cheerful personality", "enthusiasm," "bad service," "poor communicator," or "silent." The order information may include present data and historical data. The present data may refer to the relative data during the generation of the order, and the historical data may refer to the relative data before the generation of the order. For convenience, the following examples are only used to illustrate and not to limit the scope of the present disclosure. For example, the selecting unit 310 may receive the present data and the historical data from the passenger interface 230, the driver interface 240, and/or the database 130, and select the potential order receiver based on the data. Herein, the present data may include but not limited to distance between the order requestor and the order receiver, idle condition of the order receiver, or the like. The historical data may include but not limited to historical evaluation data, historical transaction data, historical pairing data of the order requestor and the order receiver. In some embodiments, the selecting unit 310 may send the order to the potential order receiver screened out. If the order receiver accepts the order, the order receiver may be determined as the order receiver taken to pairing then. In some embodiments, when processing a certain kind of historical information, the information of historical order in different periods may have same or different effect on the processing. For example, the information of recent historical order may have the same effect on the processing as the information of relatively old historical order. As another example, the information of recent historical order may have great effect on the processing, while the information of relatively old historical order may have little or none effect on the processing.

The pairing unit 320 may pair the order requestor and the order receiver that is determined to accept the order. It should be noted that the "pairing" mode may include "one-to-one," "one-to-many," "many-to-many," or the like, or any combination thereof. For example, in the "one-to-many" pairing mode, the pairing unit 320 may send the information of a plurality of order receivers to the order requestor for choosing. In the "many-to-many" pairing mode, the pairing unit 320 may send the information of a plurality of order requestors to the plurality of order receivers for choosing, then send the information of the order receivers to the order requestors for choosing. The above sequence of providing information may be exchanged or implemented simultaneously. In some embodiments, the pairing unit 320 may refer to one or more order information mentioned above (e.g., the historical data of the order requestor and the order receiver) to pair the order requestor and the order receiver based on the rules of improving probability of order transaction, speed of order transaction, experience of order transaction, or the like. In some embodiments, the order information of the order requestor and the order receiver may be processed by the pairing unit 320 (e.g., filtering, grouping, classifying, sorting, or calculating), and the pairing unit 320 may generate one or a series of pairing results. The evaluation of the pairing results may be presented by a matching degree. The presentation of matching degree may include number, text, symbol, image, or the like, or any combination thereof. The number may include a percentage, a score, a grade, or the like, or any combination thereof. The text may be "excellent," "good," "average," "bad," or the like. The symbol may be right, cross, or the like. The image may include five-pointed stars, color bars, or the like, or any combination thereof. The pairing result may be sent to the order requestor and/or order receiver. The pairing result may include the information of the order requestor and the order receiver (e.g., the present data or the historical data), the matching degree, or the like, or any combination thereof. The pairing result may be sent to the order requestor or the order receiver in the format of text, audio, image, video, or the like, or any combination thereof. The pairing result may be chose by the order requestor and the order receiver.

In some embodiments, the pairing unit 320 may further include one or more historical tab determining components 321 and one or more pairing components 322. Herein, the historical tab determining component 321 may determine the historical tab denoting the characteristics of a user based on the historical data of the order requestor and the order receiver that is determined to accept the order. The pairing component 322 may pair the order requestor and the order receiver based on the historical tab. The historical tab may be any order information above, or any combination thereof. In some embodiments, the historical tab may be generated based on the historical data of the order information, including the historical evaluation data, the historical transaction data, the historical pairing data of the order requestor and the order receiver, or the like, or any combination thereof.

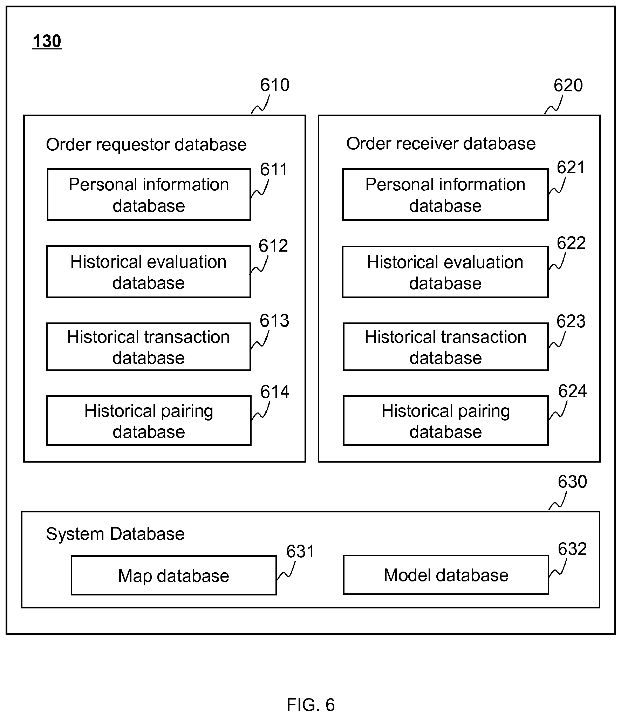

The evaluating unit 330 may receive the evaluation information of the order requestor and the order receiver. Herein, the evaluation information may be set as to be selected by the user (e.g., star rating or questionnaire), or be defined by the user to fill out (e.g., text, image). For example, the evaluation of the order requestor may be "the passenger is enthusiastic," "the frequency of taking taxi is high," "too many tips," "often go to the airport," "understanding driver," or the like. The evaluation of the order receiver may be "the driver is excellent," "good service," "no detour," "good communicator," or the like. The evaluation information received by the evaluating unit 330 may be sent to the user, or just stored in the database 130 and used to update the historical data in the database 130 (refer to the description of FIG. 6).

The training unit 340 may update the historical tab based on the historical data. For example, the historical tab of the order requestor and receiver may be updated based on the evaluation information received by the evaluating unit 330 after every order is finished. The training unit 340 may have self-learning function, and update and optimize the information of historical tab based on algorithms or models stored in itself. According to the learning styles, the self-learning may be supervised learning, unsupervised learning, semi-supervised learning, reinforcement learning, or the like. According to the algorithms, the algorithms of self-learning may be regression algorithm learning, case based learning, regularization learning, decision tree learning, bias learning, clustering algorithm learning, association rule learning, neural network learning, deep learning, dimensionality reduction algorithm, or the like. More concretely, the regression algorithm may be Ordinary Least Square, Logistic Regression, Stepwise Regression, Multivariate Adaptive Regression Splines, Locally Estimated Scatterplot Smoothing, or the like. The case based learning may be k-Nearest Neighbor, Learning Vector Quantization, Self-Organizing Map, or the like. The regularization learning may be RIDge Regression, Least Absolute Shrinkage and Selection Operator (LASSO), Elastic Net, or the like. The decision tree learning may be Classification and Regression Tree, Iterative Dichotomiser 3 (ID3), C4.5, Chisquared Automatic Interaction Detection (CHAID), Decision Stump, Random Forest, Multivariate adaptive regression spline (MARS), Gradient Boosting Machine (GBM), or the like. The bias learning may be Naive Bayes Algorithm, Averaged One-Dependence Estimators, Bayesian Belief Network (BBN), or the like. The kernelbased algorithm may be Support Vector Machine, Radial Basis Function, Linear Discriminate Analysis, or the like. The clustering algorithm learning may be k-Means algorithm, Expectation Maximization, or the like. The association rule learning may be Apriori algorithm, Eclat algorithm, or the like. The neural network learning may be Perceptron Neural Network, Back Propagation, Hopfield Network, Self-Organizing Map, Learning Vector Quantization, or the like. The deep learning may be Restricted Boltzmann Machine, Deep Belief Networks (DBN), Convolutional Network, Stacked Auto-encoders, or the like. The dimensionality reduction algorithm may be Principle Component Analysis, Partial Least Square Regression, Sammon Reflection, MultiDimensional Scaling, Projection Pursuit, or the like. The updated historical tab may be used in the next order pairing.

In some embodiments, the processing module 210 may also include a classifying unit 350 and a determining unit 360. The classifying unit 350 may be configured to classify the order information (e.g., historical data or historical tab), for example, classifying, clustering, filtering, or the like. In some embodiments, the classifying unit 350 may classify the order requestors and the order receivers. The rule that the classification for the order requestors may be based on order quality of the order requestor (e.g., original site of the order, terminal site of the order, or tips), evaluation of the order requestor, or the like. The rule of the classification for the order receivers may be motorcycle type, score for the order requestor, or the like. The determining unit 360 may process the order information (e.g., historical data or historical tab), for example, calculating, evaluating, sorting, or the like. The classifying unit 350 and the determining unit 360 may take certain instructions, codes, formulas, algorithms, programs, models, or the like to complete their mission. For example, the algorithm may include but not limited to recurrence algorithm, recursive algorithm, exhaustion algorithm, greedy algorithm, divide and conquer algorithm, dynamic programming algorithm, branch-bound algorithm, iterative algorithm, backtracking algorithm, or the like. The instructions, codes, formulas, algorithms, programs and models described above may be stored in the classifying unit 350 and the determining unit 360, or in the database 130.

It should be noted that the above description of the processing module 210 in the order pairing engine 110 is merely provided for illustration purposes, and not intended to limit the scope of the present disclosure. For persons having ordinary skills in the art, upon understanding the principle of the processing module, modifications and variations may be conducted on the formats and details of the processing module without departing the principle. For example, the processing module 210 may reside in the system, or implement corresponding functions via a cloud computing platform. In some embodiments, the processing module 210 may be modified by deleting a unit, adding a unit, or combining any units. For example, the classifying unit 350 and the determining unit 360 may be omitted, or integrated into a single unit. As another example, the selecting unit 310 and the pairing unit 320 may taking the determining unit 360 to complete their mission, or directly integrate the determining unit 360 into themselves. All modifications like these are within the protection scope of the present disclosure.

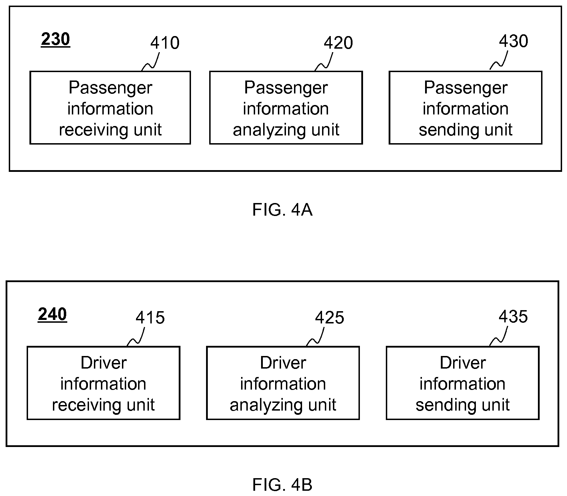

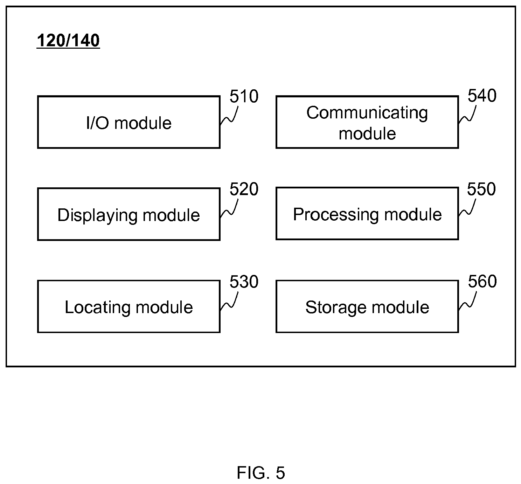

FIG. 4A illustrates a schematic diagram of an exemplary passenger interface 230 in the order pairing engine 110 according to some embodiments of the present disclosure. The passenger interface 230 may include one or more passenger information receiving units 410, one or more passenger information analyzing units 420, and one or more passenger information sending units 430. The passenger information receiving unit 410 may be configured to receive the information sent by the passenger terminal 120, and identify, reorganize, and classify the information. In terms of content, the information sent by the passenger terminal 120 may be location of the passenger terminal 120 determined by the positioning system, site/original site inputted by the passenger, other information related to the passenger, present time of the system, expected departure time/arrival time/travel time of the passenger, selection/request/description of the service the passenger ordered, content/format/time/amount of the information the passenger accepted, information about the passenger opening the service application on the passenger terminal 120, or the like, or any combination thereof. In some embodiments, the location of passenger terminal 120 may be determined by the positioning system. The positioning system may include but not limited to global positioning system (GPS), global navigation satellite system (GLONASS), Beidou navigation system, Galileo positioning system (Galileo), quasi-zenith satellite system (QZSS), base-station positioning technology, wireless fidelity (Wi-Fi) positioning technology, Bluetooth positioning technology, or the like, or any combination thereof. The passenger terminal 120 may send the location information determined by the positioning system to the order pairing engine 110 via the passenger information receiving unit 410. In some embodiments, the passenger information receiving unit 410 may receive real-time traffic service orders from the passenger terminal 120. In some embodiments, the passenger information receiving unit 410 may receive booking traffic service orders from the passenger terminal 120. In terms of format, the information sent by the passenger terminal 120 may be natural-language text that the passenger inputs into the passenger terminal 120, binary information sent by the passenger terminal 120, audio information recorded by the I/O module 510 in the passenger terminal 120 (e.g., speech input of the passenger), image information obtained by the I/O module 510 in the passenger terminal 120 (e.g., static image or video), or the like, or any combination thereof (refer to the description of FIG. 5). The passenger interface 120 may send the information to the passenger information receiving unit 410 in the passenger interface 230 via the network 150.

The passenger information analyzing unit 420 may analyze the passenger information from the passenger information receiving unit 410. The analysis may include reorganizing or classifying the passenger information, transforming the format of the passenger information, or abstracting, analyzing, or transforming the passenger information, to transform the passenger information into a kind of data that could be calculated, processed, or stored in the processing module 210 or the storage module 220. The passenger information analyzing unit 420 may also transform the processed information processed by the processing module 210 or the information stored in the storage module 220 to the information that could be read or selected by the passenger terminal 120, based on instructions or habits of the passenger terminal 120, and send the transformed information to the passenger information sending unit 430.

The passenger information sending unit 430 may send the information, which the order pairing engine 110 need to send to the passenger terminal 120, to the passenger terminal 120 via the network 150. In some embodiments, the passenger information sending unit 430 may send a confirmation about the traffic service to the passenger terminal 120 to require the passenger terminal 120 to confirm the traffic service information it sends. In terms of content, the information sent by the passenger information sending unit 430 may be passenger's traffic service order information confirmed by the on-demand system 105 or part of it (e.g., the order pairing engine 110), traffic situation about the passenger's location, other information about the passenger's location, a prompt or a notification sent by the on-demand system 105 or part of it (e.g., the order pairing engine 110), news/notification/prompt from the information source 160, responses(e.g., acceptance or refusal) to the passenger's traffic service order of one or more drivers, or the like, or any combination thereof. In some embodiments, the passenger information sending unit 430 may send the acceptances of one or more drivers about the passenger's traffic service order passenger terminal 120, the information of the drivers, or the like, to the passenger terminal 120. In terms of type or format, the information sent by the passenger information sending unit 430 may be natural-language text, binary information or audio (including any audio generated by processing the natural-language text through text-to-speech) generated by the order pairing engine 110, or the like, or any combination thereof. The passenger information sending unit 430 may provide the above information to the passenger terminal 120 via the network 150. The passenger information receiving unit 410 may include a wired or wireless receiving device, and establish connection with the passenger terminal 120 via the network 150. Similarly, the passenger information sending unit 430 may include a wired or wireless sending device, and establish connection with the passenger terminal 120 via the network 150.

FIG. 4B illustrates a schematic diagram of an exemplary driver interface 240 in the order pairing engine 110 according to some embodiments of the present disclosure. As illustrated in FIG. 4B, the driver interface 240 may include one or more driver information receiving units 415, one or more driver information analyzing units 425, and one or more driver information sending units 435. The driver information receiving unit 415 may receive the information from the driver, and identify, reorganize, and classify the information. In terms of content, the information sent by the driver may be location of the driver determined by the positioning system, driving speed of the driver, original site and/or terminal site of the present travel of the driver, response or preference of the driver to the traffic service order, present service condition fed back by the driver (e.g., occupied, ready, idle), information about selection/confirmation/refusal relevant to the service order of the driver, information about the driver opening the service application on the driver terminal 140, or the like, or any combination thereof. In terms of format, the information sent by the driver terminal 140 may be natural-language text that the driver inputs into the driver terminal 140, binary information sent by the driver terminal 140, audio information recorded by the driver terminal 140 (e.g., voice input of the driver), image information obtained by the driver terminal 140 (e.g., static image or video), or the like, or any combination thereof. The driver terminal 140 may provide the above information to the driver information receiving unit 415 in the driver interface 240 via the network 150.

The driver information analyzing unit 425 may conduct analysis operation on the driver information from the driver information receiving unit 415. The analysis operation herein may include reorganizing or classifying the driver information, transforming the format of the driver information, or abstracting, analyzing, or transforming the content of the driver information, to transform the information into a kind of data that could be calculated, processed, or stored in the processing module 210 or the storage module 220. The driver information analyzing unit 425 may transform the processed information processed by the processing module 210 or the information stored in the storage module 220 to the information that could be read or selected by the driver terminal 140, based on instructions or preferences of the driver terminal 140, and send the transformed information to the driver information sending unit 435.

The driver information sending unit 435 may send the information, which the order pairing engine 110 need to send to the driver terminal 140, to the driver terminal 140 via the network 150. In terms of content, the information sent by the driver information sending unit 435 may be traffic service orders from one or more drivers, passenger's traffic service order information confirmed by the on-demand system 105 or part of it (e.g., the order pairing engine 110), traffic situation relevant to the location, other information relevant to the location, traffic situation relevant to the passenger's location, other information relevant to the passenger's location, a prompt or notification sent by the on-demand system 105 or part of it (e.g., the order pairing engine 110), news/notification/prompt from the information source 160, responses (e.g., acceptance, refusal, etc.) to the passenger's traffic service order of other drivers, or the like, or any combination thereof. In some embodiments, the driver information sending unit 435 may send real-time traffic service orders from one or more passenger terminals 120 to the driver terminals 140. In some embodiments, the driver information sending unit 435 may send real-time booking traffic service orders from one or more passenger terminals 120 to the driver terminals 140. In terms of format, the information sent by the driver information sending unit 435 may be natural-language text, binary information or audio (including any audio generated by processing the natural-language text through text-to-speech) generated by the order pairing engine 110, or the like, or any combination thereof.

The driver information receiving unit 415 may include a wired or wireless receiving device, and establish connection with the driver terminal 140 via the network 150. Similarly, the driver information sending unit 435 may include a wired or wireless sending device and establish connection with the driver terminal 140 via the network 150.

FIG. 5 illustrates a schematic diagram of the passenger terminal 120 and the driver terminal 140 according to some embodiments of the present disclosure. For convenience, the passenger terminal 120 may be taken as an example for the illustration purposes. It should be noted that the description of the passenger terminal 120 may also apply to the driver terminal 140. As illustrated in FIG. 5, the passenger terminal 120 may include an I/O module 510, a displaying module 520, a locating module 530, a communicating module 540, a processing module 550, and a storage module 560. In some embodiments, the passenger terminal 120 may further include more modules or components.

The I/O module 510 may receive the input of a passenger on a graphical interface, map interface, and I/O operation interface of an on-demand service application, and send the information to the passenger in one or more formats. The I/O module 510 may gather and record information including, for example, optical information, acoustic information, electromagnetic information, mechanical information, etc. from the passenger or outside (e.g., surrounding condition)) as formats of static image, video, audio, mechanical vibration, or the like. The format of the input or output may be acoustic signal, optical signal, mechanical vibration signal, or the like, or any combination thereof. The displaying module 520 may display the graphical interface, map interface, I/O operation interface, operating system interface of the on-demand service application, or the like. The locating module 530 may determine the location and/or motion state of the passenger based on one or more positioning/ranging technologies. In some embodiments, the determination of passenger location and motion state may include calculating location, velocity, accelerate, angle velocity, route, or the like, or any combination thereof, of the passenger. The communicating module 540 may transmit or receive the information that the passenger terminal 120 is ready to transmit or receive, via wired or wireless communication manner. For example, the communicating module 540 may communicate with the passenger interface 230 in the order pairing engine 110 to transmit information to or receive information from the order pairing engine 110. In some embodiments, the passenger terminal 120 may also communicate with the driver terminal 140 via the communicating module 540. For example, the communication mode may include Bluetooth communication, infrared communication, or the like. Upon opening the Bluetooth of the driver terminal 140 and the passenger terminal 120, the distance between the driver and the passenger may be directly measured. The processing module 550 may calculate and process the information received by the passenger terminal 120. The storage module 560 may store the information obtained, generated, calculated, processed by the I/O module 510, the locating module 530, the communicating module 540, or the processing module 550.

The positioning technology may include but not limited to global positioning system (GPS) technology, global navigation satellite system (GLONASS) technology, Beidou navigation system technology, Galileo positioning system (Galileo) technology, quasi-zenith satellite system (QZSS) technology, base-station positioning technology, wireless fidelity (Wi-Fi) positioning technology, Bluetooth positioning technology, or the like, or any combination thereof. The ranging technology may be based on electromagnetic wave, acoustic wave, or the like, or any combination thereof. For example, the electromagnetic wave ranging technology may apply radio wave, infrared wave, visible wave, or the like, or any combination thereof. The radio wave ranging technology may apply the wavelength of Bluetooth, or wavelength of any other microwave. The infrared wave ranging technology may apply near infrared ray, mid infrared ray, far infrared ray, or the like, or any combination thereof. The acoustic wave ranging technology may apply ultrasonic wave, infrasonic wave, or acoustic wave of other frequency band, or the like, or any combination thereof. The electromagnetic wave or acoustic wave ranging technology may be based on one or more of a plurality of principles to measure the distance. For example, the electromagnetic wave or acoustic wave ranging technology may be based on wave propagation time, Doppler Effect, signal strength, signal attenuation characteristics, or the like, or any combination thereof.

It should be noted that the above description of the user 120/140 is provided for the purposes of illustration, and not intended to limit the scope of the present disclosure. For persons having ordinary skills in the art, upon understanding the functions performed by the user device, modules may be combined in various ways, or connected with other modules as sub-systems, modifications and variations may be conducted on the formats and details of the application filed implementing the methods and systems described above, to perform the similar functions. For example, the I/O module 510 and the displaying module 520 may be different modules in one system, or may be combined as a single module to perform the corresponding functions of two or more of the above modules. As another example, the locating module 530 and the communicating module 540 may be different modules in one system, or may be integrated as a single module in a hardware. All modifications like these are within the protection scope of the present disclosure.

FIG. 6 illustrates a schematic diagram of an exemplary database 130 according to some embodiments of the present disclosure. As illustrated in FIG. 6, the database 130 may include one or more order requestor databases 610, one or more order receiver databases 620, and one or more system databases 630. Herein, the order requestor database 610 and the order receiver database 620 may be configured to store information from order requestors and order receivers. The information herein may include but not limited to account information of the service, requesting information of the service, receiving information of the service, habit/preference information of the user, location information of the user, evaluation information of the user, or the like, or any combination thereof, as described elsewhere in the present disclosure.. In some embodiments, the order requestor database 610 may further include one or more personal information databases 611, one or more historical evaluation databases 612, one or more historical transaction databases 613, and one or more historical pairing databases 614. The order receiver database 620 may further include one or more personal information databases 621, one or more historical evaluation databases 622, one or more historical transaction databases 623, and one or more historical pairing databases 624. The personal information databases 611 and 621 may be configured to store personal information of the user, e.g., age, gender, nationality, address, working place, ethnicity, religion, education, work experience, marital status, emotional status, language ability, professional skill, political complexion, hobby, favorite music/TV program/movie/book, or the like. In some embodiments, the personal information databases 611 and 621 may also store service information related to the user, e.g., account name, head portrait, displayed name (e.g., nickname), number of certificate (e.g., driver's license or ID card), registration time, user level, traffic violation record, drunk driving record, driver's vehicle information, or the like. The historical evaluation databases 612 and 622 may be configured to store historical evaluation information of the user, e.g., "the passenger is enthusiastic," "the frequency of taking taxi is high," "too much tips," "often go to the airport," "understanding driver," "the driver is excellent," "good service," "no detour," "good communicator," or the like. The historical transaction databases 613 and 623 may be configured to store historical transaction data of the user, e.g., transaction times, transaction frequency, transaction volume, or the like. The historical pairing databases 614 and 624 may be configured to store historical pairing information of the user, e.g., number of pairings, number of successful pairings, or the like. In some embodiments, any number of sub databases in the order requestor database 610 and the order receiver database 620 may be integrated into a new sub database. In some embodiments, the order requestor database 610 and the order receiver database 620 may also be integrated into a user database.

In some embodiments, the system database 630 may further include one or more map databases 631, and one or more model databases 632. Herein, the map database 631 may be configured to store geographic coordinates of man-made objects (e.g., streets, bridges, or buildings), geographic coordinates of natural landscapes (e.g., water bodies, mountains, forests, or wetlands), descriptive names or logos of the objects described above (e.g., street number, building name, river name, or shop name), the image information of the objects described above, or the like. The model database 632 may be configured to store instructions, codes, formulas, algorithms, and models used in the units of the processing module 210. According to the functions, models stored in the model database 632 may be classified into selecting model, matching model, evaluating model, training model, classifying model, calculating model, or the like. For convenience, the classifying model may be taken as an example for illustration purposes. For example, after the database 130 obtains the information from the passenger interface 230, the driver interface 240 and/or the information source 160, a classifying module may be used to classify the information. The information may be classified in the categories including, e.g., personal information, historical evaluation information, historical transaction information, historical pairing information, or the like. Then the classified information may be stored in different categories and called by the processing module 210. In addition, for the information in a certain category, e.g., historical evaluation information, it may be reclassified by a classification model. For example, the historical evaluation information may be reclassified in finer levels. Algorithms used in the above classifying models may include partition algorithm, hierarchical algorithm, density algorithm, graph theory-clustering algorithm, mesh algorithm, model algorithm, or the like, or any combination thereof.

It should be noted that the above description of the database 130 is merely provided for illustration purposes, and not intended to limit the scope of the present disclosure. For persons having ordinary skills in the art, upon understanding the principles of the database, variations and modifications on forms and details of the database 130 may be conducted without departing the principle. For example, the database 130 may reside in the system, or implement corresponding functions via a cloud computing platform. In some embodiments, the database 130 may be modified by deleting a unit, adding a unit, or combining any two or more units therein. For example, the historical evaluation database, the historical transaction database, and the historical pairing database may be integrated into a historical database. The order requestor database and the order receiver database may be integrated into a user database. All modifications like these are within the protection scope of the present disclosure.

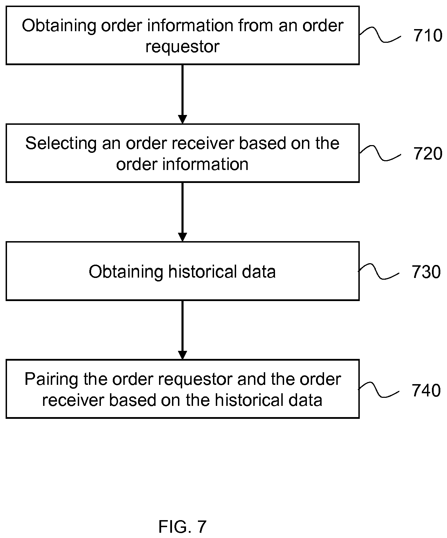

FIG. 7 illustrates a flow chart of an exemplary process for pairing orders according to some embodiments of the present disclosure. In step 710, the order pairing engine 110 may obtain order information of an order requestor via the network 150. The order information may be from one or more passenger terminals 120. The order information may include original site of the order, terminal site of the order, departure time of the order, trip mode, surcharge, or the like, or any combination thereof. The original site and the terminal site may be determined by a certain positioning system, or inputted by a passenger. The positioning system may be as described elsewhere in the present disclosure and not illustrated again. The trip mode may include but not limited to chauffeured car, ride sharing service, taxi, bus, train, bullet train, high-speed rail, subway, ship, airplane, or the like, or any combination thereof. In some embodiments, in step 710, the order pairing engine 110 may also obtain historical data of the order requestor, location information of the order receiver waiting to be selected, idle condition of the order receiver waiting to be selected, or the like. The order pairing engine 110 may obtain the historical data of the order requestor from the order requestor database 610 in the database 130. The historical data may include historical evaluation data, historical transaction data, historical pairing data, or the like, or any combination thereof. The location information and the idle condition of the order receiver waiting to be selected may be obtained from the driver interface 240.

In step 720, the order pairing engine 110 may select the order receivers based on a rule to determine one or more order receivers that suit to the order requestor. In some embodiments, the order pairing engine 110 may select the order receiver based on the order information from the order requestor. In some embodiments, the order pairing engine 110 may select the order receiver based on the original site of the order and the locations of the order receivers. For example, the determining unit 360 in the processing module 210 of the order pairing engine 110 may determine the distances between the original sites of the order requestor and the locations of the order receivers waiting to be selected. If the distances are longer than a threshold, the order pairing engine 110 may not send the order to the corresponding order requestors. The threshold may be any value, e.g., 5 kilometers, 4 kilometers, 3 kilometers, 2 kilometers, 1 kilometer, 500 meters, or the like. In some embodiments, the order pairing engine 110 may select the order receivers based on the trip mode. For example, if a passenger chooses to take a chauffeured car service, the order pairing engine 110 may only send the order to the chauffeured cars.

In some embodiments, the order pairing engine 110 may select the order receiver based on the historical data of the order requestor. Taking the taxi hailing service as an example, if historical order recorder of one passenger shows that, the passenger chose the ride sharing service more times than other trip modes, the passenger only chose the driver having score higher than 90, or the passenger preferred to choose the driver good at communicating, then the order pairing engine 110 may select the driver based on the historical data of the order requestor.

In some embodiments, the order pairing engine 110 may select the order receiver based on his idle condition. For example, the order pairing engine 110 may send the order to the driver whose present condition is idle. As another example, a driver is implementing the order A, and the time of completing the order A is expected in a time threshold, then the order pairing engine 110 may send the order to the driver. The time threshold may be any value, e.g., 30 minutes, 20 minutes, 10 minutes, 5 minutes, or the like. In some embodiments, the order pairing engine 110 may select the order receiver based on the order information, the historical data of the order requestor, the idle condition of the order receiver, or the like, or any combination thereof. The selection of the order receiver described above may be implemented by the processing module 210.

After selecting the order receiver, in step 730, the order pairing engine 110 may obtain historical data of the order receiver. The historical data of the order receiver may be from the order receiver database 620 of the database 130. It should be noted that the obtaining of the historical data of the order requestor and the order receiver may be executed at the same time or at the different steps. The order pairing engine 110 may obtain the historical data relating to the order requestor based on the personal information of the order requestor, e.g., telephone number, account number, user name, fingerprint, or the like. The historical data relating to the order requestor may include historical evaluation data, historical transaction data, historical pairing data of the order requestor, or the like, or any combination thereof. The order pairing engine 110 may obtain the historical data relating to the order receiver based on the personal information of the order receiver, e.g., telephone number, account number, user name, fingerprint, or the like. The historical data relating to the order receiver may include historical evaluation data, historical transaction data, historical pairing data of the order receiver, or the like, or any combination thereof.

In step 740, the order pairing engine 110 may pair the order requestor and the order receiver based on the historical data of the order requestor and/or the order receiver and a pairing rule. In some embodiments, the pairing type may be one-to-one, e.g., one order receiver may be chosen for one order requestor to implement the order. In some embodiments, the pairing type may be one-to-many, e.g., a plurality of order receivers may be chosen for one order requestor to implement the order, or the order pairing engine 110 may choose a plurality of orders from the order requestors for an order receiver to choose to implement. In some embodiments, the pairing type may be many-to-many, e.g., a plurality of order receivers may be chosen to be sent to a plurality of order requestors, and a plurality of orders may be sent to a plurality of order receivers, and after processed by the order receivers and the order requestors, the order pairing engine 110 may choose one or more order receivers to one order requestor.

The pairing rule may include number of pairings, number of transaction, historical evaluation, or the like, or any combination thereof. In some embodiments, the order pairing engine 110 may sort the selected order receivers based on the number of pairings between the order receiver and the order requestor from many to less, and select the top few ranked order receivers as the receivers of the order. In some embodiments, the order pairing engine 110 may send the order receivers, whose number of pairings with the order requestor is larger than a threshold, to the order requestor to choose. The threshold may be any value, e.g., 10 times, 9 times, 8 times, 7 times, 6 times, 5 times, 4 times, 3 times, or the like. In some embodiments, the order pairing engine 110 may take the order receiver, who has the largest number of pairings with the order requestor, as the receiver of the order. The number of pairings may be obtained from the historical pairing database 614 of the order requestor.

In some embodiments, the order pairing engine 110 may sort the order receivers according to the number of transactions. In some embodiments, the number of transactions may refer to the whole number of the historical transactions of the order receiver. In some embodiments, the number of transactions may be the number of transactions of the order receiver in a historical period (e.g., the recent 2 months), the number of transactions in a time period (e.g., 8:00-10:00 am), the number of transactions in a certain region, or the like, or any combination thereof. In some embodiments, the order pairing engine 110 may send the order receivers whose number of transactions is larger than a predetermined threshold, or ranks top few, to the order requestor to choose. The predetermined threshold may be any value, e.g., 500 times, 400 times, 300 times, 200 times, 100 times, or the like. In some embodiments, the order pairing engine 110 may take the order receiver who has the largest number of transactions as the receiver of the order. The number of transactions may be obtained from the historical transaction database 623 of the order receiver.

In some embodiments, the order pairing engine 110 may obtain the historical evaluation information of the selected order receiver. The historical evaluation information may be from the historical evaluation database 622 of the order receiver database 620. The order pairing engine 110 may select information of one or more order receivers, based on the historical evaluation, and send the information to the order requestor. In some embodiments, the order pairing engine 110 may determine the type of the order receiver that the order requestor prefers to choose based on the historical data stored in the order requestor database 610, and choose the suitable order receiver for the order.

In some embodiments, the order pairing engine 110 may pair the order requestor and receiver based on the historical data, or the historical tab abstracted from the historical data. For example, the historical tab determining component 321 in the pairing unit 320 of the processing module 210 may abstract the historical data of the order requestor and/or the historical tab of the historical data of the order receiver. In some embodiments, the historical tab may be abstracted from the historical evaluation database 612 in the order requestor database 610 and/or the historical evaluation database 622 in the order receiver database 620. The historical tab may be keywords that reflect the characteristics of the passenger and/or the driver. For example, the historical tab of the passenger may include "the frequency of taking taxi is high," "too much tips," "often go to the airport," or the like. The historical tab of the driver may include "the driver is excellent," "good service," "no detour," "good communicator," or the like. Based on the historical tab of the order requestor and the order receiver, the pairing component 322 in the pairing unit 320 may pair the order requestor and the order receiver that is determined to accept the order.

It should be noted that the above embodiments of the order pairing process is merely provided for illustration purposes, and not intended to limit the scope of the present disclosure. For persons having ordinary skills in the art, upon understanding the basic principle of the order pairing, variations and modifications on forms and details of the embodiments and steps of order pairing process may be conducted without departing the principle. In some embodiments, the process may include other steps, for example, the intermediate process result and/or the final process result may be stored. The process result may be stored in the storage module 220, the database 130, or any other module or unit that has storage function in the on-demand service system 105. In some embodiments, the order pairing engine 110 may pair based on the historical data, or on the historical tab abstracted from the historical data. In some embodiments, the process may also include judging whether the confirmation about accepting the order sent by the order receiver is received or not, and the order pairing engine 110 may choose the suitable order receiver from those that are determined to accept the order to implement the order. In some embodiments, the order pairing engine 110 may send a plurality of order receivers for the order requestor to choose. The order requestor may determine one of the plurality of order receivers to complete the order. In some embodiments, the order requestor may be unsatisfied with the pairing result of the order pairing engine 110 and refuse to accept the result, then the order pairing engine 110 may reselect suitable order receiver for the order based on the original rule or new rule. In some embodiments, several steps in the process may be merged into a single step, e.g., for step 710 and step 730, the order information of the order requestor, the historical data of the order requestor, and the historical data of the order receiver may be obtained in a single step. All modifications like these are within the protection scope of the present disclosure.

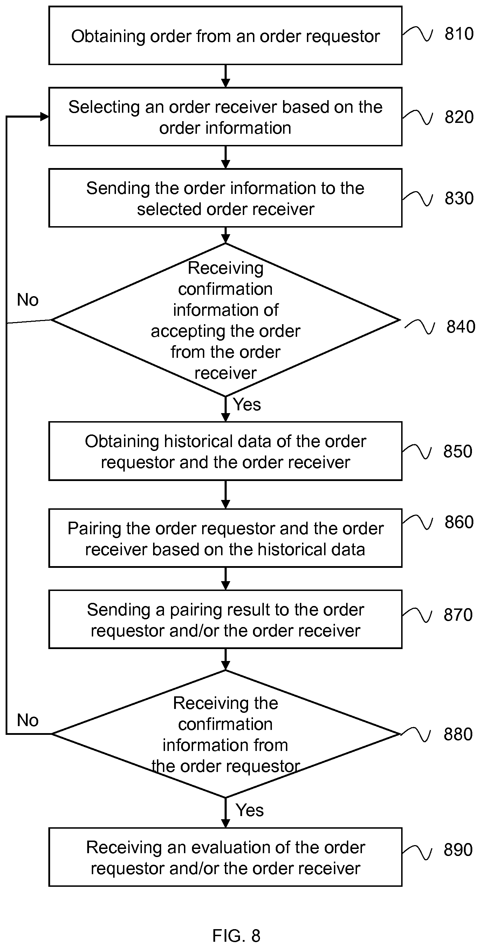

FIG. 8 illustrates a flow chart of an exemplary process for pairing orders according to some embodiments of the present disclosure. In step 810, the order pairing engine 110 may obtain the order information of the order requestor via the network 150. The order information may be from one or more passenger terminals 120. The order information may be similar to the order information as described elsewhere in the present disclosure and not illustrated again. In some embodiments, in step 810, the order pairing engine 110 may obtain historical data of the order requestor, location information of the order receiver waiting to be selected, idle condition of the order receiver waiting to be selected, or the like. The order pairing engine 110 may obtain the historical data of the order requestor from the order requestor database 610 of the database 130. In step 820, the order pairing engine 110 may select the order receiver based on the order information, e.g., historical data of the order requestor, historical data of the order receiver waiting to be selected, location information of the order receiver waiting to be selected, idle condition of the order receiver waiting to be selected, or the like, or any combination thereof. The detailed description may refer to FIG. 7. Herein, the selection of the order receiver may be executed by the selecting unit 310 in the processing module 210.

In step 830, the order pairing engine 110 may send the order information to the selected order receiver. The sending of the order information may be executed by the driver interface 240 of the order pairing engine 110. The selected order receiver may determine whether choose the order or not, e.g., accepting or refusing. In some embodiments, the order pairing engine 110 may also send the historical data of the order requestor to the order receiver. The historical data of the order requestor may be the whole historical data, or part of the historical data. In some embodiments, the historical data may be the historical data in a certain period (e.g., the recent 2 months), the historical data in a time period (e.g., 8:00-10:00 am), or the like. The historical data of the order requestor may include historical transaction data, historical evaluation data, historical pairing data, or the like. In some embodiments, the decision about whether accept the order or not may be only based on the order information. In some embodiments, the decision about whether accept the order or not of the order receiver may be based on the order information and the historical data of the order requestor. In step 840, the order pairing engine 110 may determine whether confirmation of accepting the order from the order receiver is received or not, e.g., the confirmation of accepting the order. If the order pairing engine 110 receives the confirmation, then in step 850, the order pairing engine 110 may obtain the historical data of the order requestor. In some embodiments, the order pairing engine 110 may also obtain the historical data of the order requestor in step 850. The historical data of the order requestor may be from the order requestor database 610 of the database 130. The historical data of the order receiver may be from the order receiver database 620 of the database 130. The historical data of the order requestor and the order receiver may be obtained at the same time, or at the different steps. The order pairing engine 110 may obtain the historical data relating to the order requestor based on the personal information of the order requestor, e.g., telephone number, account number, user name, fingerprint, or the like. The historical data relating to the order requestor may include historical evaluation data, historical transaction data, historical pairing data of the order requestor, or the like, or any combination thereof. The order pairing engine 110 may obtain the historical data relating to the order receiver based on the personal information of the order receiver, e.g., telephone number, account number, user name, fingerprint, or the like. The historical data relating to the order receiver may include historical evaluation data, historical transaction data, historical pairing data of the order receiver, or the like, or any combination thereof.

In step 840, if the order pairing engine 110 does not receive the confirmation of accepting the order, the process may return to step 820, e.g., the order pairing engine 110 may reselect the order receiver, based on a new selecting rule, or based on the original selecting rule after a certain time. The selecting rule may be from the model database 632 in the system database 630 of the database 130. The new selecting rule may be stored in the model database 632.

After the order pairing engine 110 obtains the historical data of the order requestor and/or the order receiver that is determined to accept the order, in step 860, the order pairing engine 110 may pair the order requestor and the order receiver based on the historical data. The historical data may include historical pairing data, historical transaction data, historical evaluation data of the order requestor and the order receiver, or the like. In some embodiments, the order pairing engine 110 may pair the order requestor and the order receiver based on other data of the order information, e.g., the historical tab abstracted from the historical data. The pairing type may be one-to-one, one-to-many, or many-to-many. The pairing based on the historical data of the order requestor and the order receiver may be as described elsewhere in the present disclosure (e.g., FIG. 7) and not illustrated again.

In step 870, the order pairing engine 110 may send the pairing result to the passenger terminal 120 and/or the driver terminal 140 via the passenger interface 230 and/or the driver interface 240. In some embodiments, the order pairing engine 110 may send the information of the most appropriate order receiver to the order requestor, and the order requestor may tacitly approve the order receiver accepting the order to implement the order without doing anything. In some embodiments, the order pairing engine 110 may send the information of two or more appropriate order receivers to the order requestor to choose, and the information may be displayed to the order requestor as formats of text, audio, image, video, or the like. In some embodiments, the pairing result determined by the order pairing engine 110 may be confirmed by the order requestor. For example, the order pairing engine 110 may receive the processing of the pairing information from the passenger terminal 120. The processing may include accepting the pairing result, choosing one of the pairing results, refusing the pairing result, or asking for new pairing, or the like.

In step 880, the order pairing 110 may determine whether the confirmation of the pairing result from the order requestor is received or not. The confirmation may include directly accepting the pairing result, or choosing one of the pairing result. For example, for an order A initiated by the order requestor, the order pairing engine 110 may send the order receiver "First" as the result to the order requestor, and the order requestor may accept the order receiver "First" to implement the order. As another example, for an order A initiated by the order requestor, the order pairing engine 110 may send the order receiver "First," "Second," and "Third" as the results to the order requestor, and the order requestor may choose the order receiver "First" to implement the order. If the order pairing engine 110 receive the confirmation about the pairing result of the order requestor, then the order pairing engine 110 may send the order to the order receiver accepted or chosen by the order requestor. When the order receiver completes the order, the order requestor and the order receiver may evaluate the service. The evaluation may include evaluation to the order requestor and the order receiver. The evaluation to the order requestor may include the quality of the order (e.g., additional fee, distance, or difficulty degree of taking taxi of original site or terminal site), characteristics of the order requestor (e.g., preferred topic or character), or the like. The evaluation to the order receiver may be whether good at communicating, aging degree of the car, whether taking a detour, whether helping to open the door when the passenger is getting on and off, whether smoking during driving, driving speed, whether on time, or the like. The format of the evaluation may be text, image, audio, video, or the like.

In step 890, the evaluating unit 330 of the order pairing engine 110 may receive the evaluation information. The received evaluation information and/or the transaction pairing data of the present order may be stored in the order requestor database 610 and/or order receiver database 620 for updating the order requestor database 610 and/or the order receiver database 620. For example, the historical data and/or the historical tab of the order requestor and/or the order receiver database 620 may be updated.

In step 880, if the order pairing engine 110 does not receive the confirmation of accepting the order from the order requestor, or receives the refusing of the pairing result, the process may return to step 820, e.g., the order pairing engine 110 may reselect the order receiver, based on a new selecting rule, or based on the original selecting rule after a certain time. The rule may be from the model database 632 in the system database 630 of the database 130. The new selecting rule may be stored in the model database 632. In some embodiments, in step 880, if the order pairing engine 110 does not receive the confirmation of accepting the order requestor, or receives the refusing of the pairing result, the process may return to step 860. The order pairing engine 110 may select the order receiver based on the new pairing rule.

It should be noted that the above embodiments of the order pairing process is merely provided for illustration purposes, and not intended to limit the scope of the present disclosure. For persons having ordinary skills in the art, upon understanding the principle of the order pairing process, modifications and variations may be conducted on the formats and details of the embodiments and steps of the order pairing process. In some embodiments, the process may include other steps, for example, the intermediate process result and/or the final process result may be stored. The process result may be stored in the storage module 220, the database 130, or any other module or unit that has storage function in the on-demand service system 105. In some embodiments, the order pairing engine 110 may pair the order based on the historical data, or on the historical tab abstracted from the historical data. In some embodiments, some steps in the process may be merged into one step, e.g., for step 810 and step 850, the order information of the order requestor, the historical data of the order requestor, and the historical data of the order receiver may be obtained in a single step. In some embodiments, some steps in the process may not be necessary, e.g., step 880. In some embodiments, the order pairing engine 110 may take the generated order receiver as the order receiver to implement the order without the participation of the order requestor. All modifications like these are within the protection scope of the present disclosure.

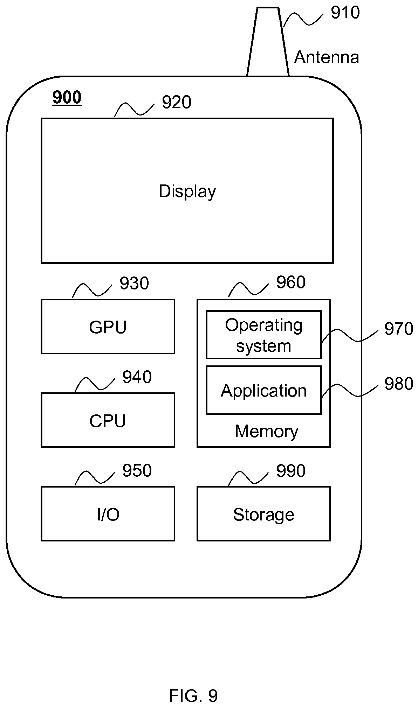

FIG. 9 illustrates an exemplary structure of a mobile device configured to implement systems disclosed in the present disclosure. in some embodiments, the user device configured to display and interact the information relating to the location may be a mobile device 900, including but not limited to smart phone, tablet, music player, portable console, global positioning system (GPS) receiver, wearable computing device (e.g., glasses or watches), or the like, or any combination thereof as described elsewhere in the present disclosure. The mobile device 900 may include one or more CPUs 940, one or more GPUs (Graphical Processing Units) 930, a display 920, a memory 960, an antenna 910 (e.g., a wireless communicating unit), a storage 990, and one or more I/O 950. Any other component, e.g., the system bus or controller (not shown in FIG. 9), may also be included in the mobile device 900. As illustrated in FIG. 9, an operating system 970, e.g., iOS, Android, or Windows Phone, and one or more applications 980 may be loaded from the storage 990 into memory 960, and implemented by the CPU 940. The application 980 may include an explorer or any other suitable applications in the mobile system 900 that could receive and process the order information. The user interaction about the order information may be obtained and provided to the order pairing engine 110 via the I/O 950, and/or other components in the location-based service system 100, e.g., the network 150.

For implementing the function of the different modules/units illustrated in the present disclosure, a computer hardware platform may be configured as the hardware platform for one or more elements described above, e.g., the order pairing engine 110, and/or other components in the location-based service system 100. The hardware element, operating system, and program language may be common in the natural world. It is assumed that those skilled in the art are familiar with these techniques, and could apply the technique in the present disclosure to supply the on-demand service information. A computer including user interface elements may be taken as a personal computer (PC), or any other type of workstation or termination, and as a server after properly programmed. It will be appreciated by those skilled in the art that the structure, program, and general operation of the computer device may be familiar for them. Therefore, the figures does not need any additional explanation.

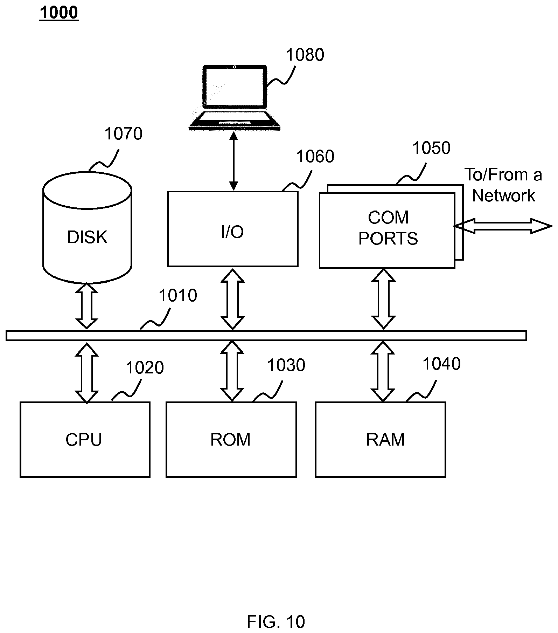

FIG. 10 illustrates an exemplary structure of a computing device configured to implement systems disclosed in the present disclosure. In some embodiments, the specific system takes the functional block diagram to illustrate a hardware platform including a user interface. The computer device may be a general computer device, or a specific computer device. The two kinds of computer devices may both be configured to implement the specific system in the embodiments. The computer 1000 may be configured to execute any unit used for present order pairing. For example, the order pairing engine 110 may be implemented by the hardware, software, firmware, and any combination thereof. For convenience, there is only one computer in FIG. 10, while the relevant computer functions described in the embodiments for providing on-demand services information may be implemented in a distributed manner by a set of similar platforms to decentralize the processing load of the system.

The computer 1000 may include communication ports 1050 that are connected to network configured to implement data communication. The computer 1000 may further include a CPU 1020 which may be configured to implement instructions and include one or more processors. The exemplary computer platform may include a bus 1010, all kinds of program storage units and database storage units, e.g., a disk 1070, a read only memory (ROM) 1030, a random access memory (RAM) 1040, all kinds of data files used in the computer processing and/or communication, probable program instructions implemented by the CPU, or the like. The computer 1000 may further include an I/O component 1060 that is configured to support the input/output data streams between the computer and other components. The computer 1000 may further receive program and data via communication network.

Various aspects of the methods of order pairing and/or methods for implementing other steps through programs are described. The program part of a technology may be considered as "product" or "production" in the form of executable code and/or related data. It is participated or implemented by a computer-readable medium. A visible, permanent storage medium may include storage or memory used by any computer, processor, or similar device or related module, for example, semiconductor memory, tape drives, disk drives, or devices that provide storage functions for software at any time.

All software or a part of it may sometimes communicate via a network, e.g., the Internet, or other communication networks. Such communications can load software from one computer device or processor to another, for example, loading from a management server or host computer in an on-demand service system to a computer hardware platform, or to other computer environment that may implement the system, or to systems with the similar function like providing on-demand services required information. Therefore, another medium that delivers software elements may also be used as physical connections between local devices, e.g., light wave, radio wave, or electromagnetic wave, spreading through electric cables, optic cables, or air. A physical medium used as a carrier, e.g., electric cable, wireless connection, or optical cable, may also be considered a medium for carrying software. Herein, unless the visible "storage" medium is restricted, other terms that represent the computer or machine "readable medium" represent the medium attending in the processes that the processor executes any instruction.

A computer-readable medium may be in many forms, including but not limited to, visible storage media, carrier media, or physical transmission media. Stable storage media may include compact disks or magnetic disks, and storage systems used in other computers or similar devices that enable the system components described in the diagram. Unstable storage media may include dynamic memory, e.g., the main memory of a computer platform. The visible transmission medium may include coaxial cable, copper cable, and optical fiber, including circuitry forming the bus within the computer system. A carrier transmission medium may transmit electrical signals, electromagnetic signals, acoustic signals, or light wave signals, which can be generated by radio frequency or infrared data communication. A computer-readable medium may usually include hard disk, floppy disk, magnetic tape, any other medium; CD-ROM, DVD, DVD-ROM and any other optical media; and hole punched card, any other physical storage medium that include a hole mode; RAM, PROM, EPROM, FLASH-EPROM, or any other memory chip or tape; carrier transmitting data or instructions, cable or connection device for a carrier wave, any other program code and/or data that can be read by a computer. In the form of these computer-readable media, there are a variety of them occurring in the processes when the processor is executing instructions and delivering one or more results.

For persons having ordinary skills in the art, various variations and modifications may be conducted under the teaching of the present disclosure. For example, the different system components described above are implemented through hardware devices, but may also be implemented merely through software solutions. For example, the system may be installed on the existing server. In addition, the location information disclosed herein may be implemented through a firmware, a combination of firmware/software, a combination of firmware/hardware, or a combination of hardware/firmware/software.

The present disclosure describes the application and/or some examples. According to the present disclosure, various modifications may be conducted under the teaching of the present disclosure. The subject disclosed in this application can be implemented in different forms and examples, and this application can be applied to a large number of applications. All the applications, modifications, and changes required in the claims are within the scope of this application.

## Claims

1. A system, comprising:
a computer-readable storage medium, configured to store an executable module, comprising:
a sending unit, configured to send order information;
a selecting unit, configured to determine whether an order receiver accepts the order; and
a pairing unit, configured to pair the order based on historical data of an order requestor and the order receiver that is determined to accept the order; and
a processor configured to execute the executable module stored in the computer-readable storage medium.

2. The system of claim 1, wherein the system further comprises:
a receiving unit, configured to obtain the information associated with the order, the information including the historical data and/or present data of the order requestor and/or the order receiver.

3. The system of claim 1, wherein the selecting unit determines whether the order receiver accepts the order based on at least one of:
the historical data of the order requestor,
distance between the order requestor and the order receiver, or
idle condition of the order receiver.

4. The system of claim 1, wherein to determine whether the order receiver accepts the order, the selecting unit is further configured to:
send at least part of the historical data of the order requestor to the order receiver.

5. The system of claim 1, wherein the historical data includes at least one of:
historical evaluation data of the order requestor and the order receiver;
historical transaction data of the order requestor and the order receiver; and
historical pairing data of the order requestor and the order receiver.

6. The system of claim 1, wherein the pairing unit further includes:
a historical tab determining component, configured to determine a historical tab that denotes characteristic of the order requestor and the order receiver based on the historical data of the order requestor and the order receiver; and
a pairing component, configured to pair the order requestor and the order receiver that is determined to accept the order.

7. The system of claim 6, wherein the historical tab includes at least one of:
the historical evaluation data of the order requestor and the order receiver;
the historical transaction data of the order requestor and the order receiver; and
the historical pairing data of the order requestor and the order receiver.

8. The system of claim 6, wherein the historical tab determining component is further configured to update the historical tab based on update of the historical data.

9. A method, comprising:
Sending order information from an order requestor to an order receiver;
determining whether the order receiver accepts the order; and
pairing the order based on historical data of the order requestor and the order receiver that is determined to accept the order.

10. The method of claim 9, further comprising:
obtaining the information associated with the order, the information including the historical data and/or present data of the order requestor and/or the order receiver.

11. The method of claim 9, wherein the determining whether the order receiver accepts the order is based on at least one of:
the historical data of the order requestor,
distance between the order requestor and the order receiver, or
idle condition of the order receiver.

12. The method of claim 9, wherein the determining whether the order receiver accepts the order further comprises:
sending at least part of the historical data of the order requestor to the order receiver.

13. The method of claim 9, wherein the historical data includes at least one of:
historical evaluation data of the order requestor and the order receiver;
historical transaction data of the order requestor and the order receiver; and
historical pairing data of the order requestor and the order receiver.

14. The method of claim 9, wherein the pairing the order based on the historical data of the order requestor and the order receiver that is determined to accept the order, further comprising:
determining a historical tab that denotes characteristic of the order requestor and the order receive based on the historical data of the order requestor and the order receiver; and
pairing the order requestor and the order receiver that is determined to accept the order.

15. The method of claim 9, wherein the historical tab further includes at least one of:
the historical evaluation data of the order requestor and the order receiver;
the historical transaction data of the order requestor and the order receiver; and
the historical pairing data of the order requestor and the order receiver.

16. The method of claim 9, further comprising:
updating the historical tab based on update of the historical data.

17. A system, comprising:
a computer-readable storage medium;
code stored in the computer-readable storage medium; and
a processor,
wherein when executing the code, the processor performs actions comprising:
sending order information;
determining whether an order receiver accepts the order; and
pairing the order based on historical data of the order requestor and the order receiver that is determined to accept the order.

18. A method, comprising:
sending, by a terminal, information to the system of claim 1 or 17; and
receiving, by the terminal, an order pairing result determined by the system based on the information.

19. The method of claim 18, wherein the terminal includes an order requestor terminal and an order receiver terminal.

20. The method of claim 18, wherein the information includes at least one of:
location information, confirming information, historical information, or evaluation information of the order requestor; and
location information, idle condition, snatching order information, historical data, or evaluation information of the order receiver.

21. The method of claim 18, wherein the terminal is configured to display the order pairing result, and display format includes voice, text, image, or video.
